# FASCICULE DE BREVET EUROPEEN

(11) **EP 0 381 583 B1**
(45) Date de publication et mention de la délivrance du brevet: **06.07.1994**
(21) Numéro de dépôt: 90400264.9
(22) Date de dépôt: 31.01.1990
(51) Int. Cl.: H05B 3/34, F24D 13/02

(54) **Dispositif de chauffage, par rayonnement infrarouge, fixé sur un mur ou le plafond d'une pièce d'un bâtiment**
Heizvorrichtung mittels Infrarotstrahlung, welche auf einer Mauer oder der Decke eines Gebäuderaumes befestigt ist
Infrared radiation heating device affixed on a wall or the ceiling of a room of a building

(30) Priorité: 02.02.1989 FR 8901362
(43) Date de publication de la demande: 08.08.1990
(73) Titulaire: Scherrer, Fernand, F-68170 Rixheim (FR)
(72) Inventeur: Scherrer, Fernand, F-68170 Rixheim (FR)
(74) Mandataire: Bruder, Michel

(56) Documents cités:
- EP-A- 0 320 349
- DE-A- 3 039 444
- FR-A- 1 340 968
- FR-A- 2 518 712
- FR-A- 2 559 185
- GB-A- 2 126 057
- US-A- 3 737 624
- US-A- 3 798 419
- US-A- 4 107 512
- US-A- 4 354 091
- US-A- 4 468 557

## Description

La présente invention concerne un dispositif de chauffage, par rayonnement infrarouge, fixé sur un mur ou le plafond d'une pièce d'un bâtiment, afin d'assurer le chauffage de cette pièce.

On connaît déjà des dispositifs de chauffage de ce type qui utilisent des éléments émetteurs de rayonnement infrarouge chauffés par effet Joule et connectés à cet effet à une source de courant électrique. Les éléments émetteurs de rayonnement infrarouge sont constitués par des feuilles, des films, des tissus etc. en matériau conducteur de l'électricité et qui sont tendus à une certaine distance du mur ou du plafond de la pièce à chauffer. De tels dispositifs sont décrits par exemple dans les brevets DE-O-2 202 208 et DE-A-2 310 119.

On connaît également, ainsi qu'il est décrit dans le brevet DE-O-3 026 098, un dispositif de chauffage par le sol qui comprend essentiellement une feuille métallique conductrice de l'électricité s'étendant suivant un trajet sinueux ou formant des méandres imbriqués les uns dans les autres et qui porte, à ses deux extrémités, des bornes de raccordement à une source d'alimentation électrique. Dans ce dispositif la feuille métallique est enfermée hermétiquement entre deux feuilles de matière plastique, par soudage de ces feuilles, et cet ensemble est fixé, au moyen d'agrafes, sous un revêtement textile constituant le sol de la pièce à chauffer. L'alimentation électrique de la feuille métallique chauffante s'effectue à basse tension, inférieure à 42 volts, par l'intermédiaire d'un transformateur et d'un régulateur de courant. Un tel dispositif de chauffage est particulièrement intéressant parce qu'il présente une sécurité totale en ce qui concerne les risques d'incendie, du fait de son alimentation à basse tension. Toutefois, du fait qu'il se trouve incorporé dans le tapis placé au sol d'une pièce à chauffer, il doit être adapté exactement aux dimensions de cette pièce. Par ailleurs il ne peut être utilisé qu'au sol et il est absolument inadapté à une installation sur un mur ou sous un plafond, ce qui peut être désirable dans de nombreux cas pour des raisons de commodité d'installation et d'efficacité du chauffage.

La présente invention concerne des perfectionnements apportés à ces dispositifs de chauffage de manière à procurer un dispositif présentant toute sécurité de fonctionnement, notamment à l'égard des risques d'incendie, assurant un chauffage efficace et réglable à volonté et pouvant être très aisément installé sur un mur ou sous un plafond d'une pièce.

A cet effet ce dispositif de chauffage, par rayonnement infrarouge, fixé sur un mur ou sous le plafond d'une pièce d'un bâtiment, comportant un émetteur de rayonnement infrarouge plan constitué par une feuille en un matériau conducteur de l'électricité raccordé à une source d'alimentation en courant électrique à basse tension, est caractérisé en ce que la feuille conductrice de l'électricité fait partie d'une bande composite et elle est revêtue, sur sa face qui est tournée vers l'intérieur de la pièce à chauffer, d'une couche mince noire, à pouvoir émissif élevé, et du côté opposé, d'une feuille formant réflecteur du rayonnement infrarouge en direction de l'intérieur de la pièce.

On décrira ci-après, à titre d'exemple non limitatif, une forme d'exécution de la présente invention, en référence au dessin annexé sur lequel :

La figure 1 est une vue en plan d'un dispositif de chauffage par rayonnement infrarouge suivant l'invention, monté sous le plafond d'une pièce.

La figure 2 est une vue en coupe verticale faite suivant la ligne II-II de la figure 1.

La figure 3 est une vue en coupe verticale et transversale, à plus grande échelle, d'une bande composite élémentaire faisant partie du dispositif de chauffage.

La figure 4 est une vue en élévation d'un dispositif de raccordement électrique d'un câble d'alimentation et d'une feuille conductrice de l'électricité.

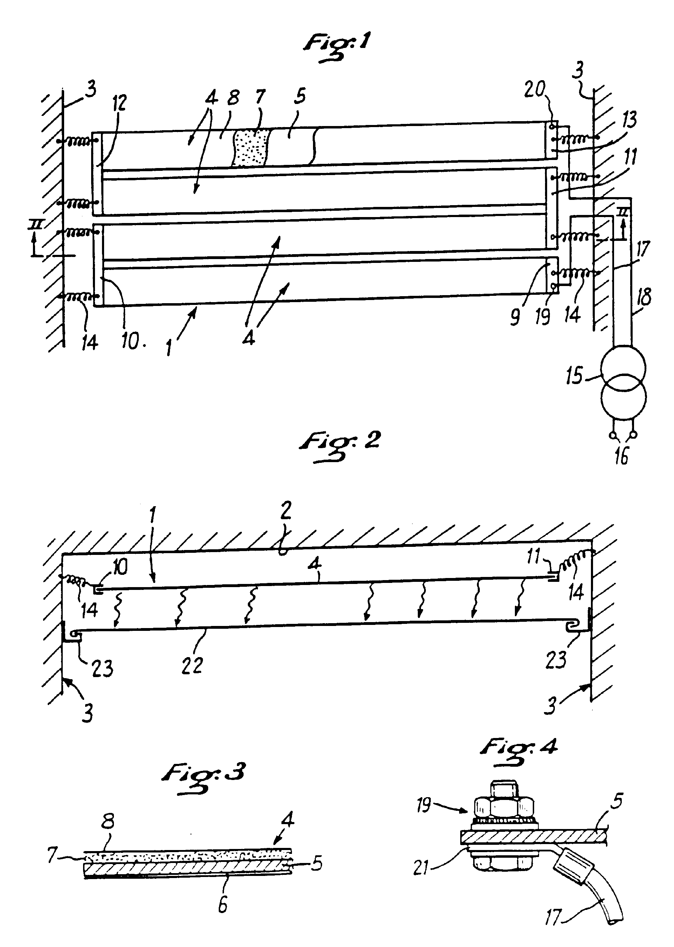

Le dispositif de chauffage suivant l'invention qui est indiqué dans son ensemble par la référence 1 sur les figures 1 et 2, s'étend horizontalement en-dessous du plafond 2 d'une pièce à chauffer, entre les murs 3 de cette pièce. Ce montage n'est toutefois pas limitatif et le dispositif de chauffage 1 pourrait aussi bien s'étendre verticalement, parallèlement à un mur 3.

Le dispositif de chauffage 1 est constitué de plusieurs bandes composites parallèles 4 qui s'étendent dans un même plan horizontal. Chaque bande composite 4, de forme rectangulaire, comprend, à sa partie inférieure, une feuille mince 5, ayant par exemple une épaisseur de 0,2 millimètre, en un matériau conducteur de l'électricité tel que l'aluminium. Cette feuille mince 5 conductrice de l'électricité est revêtue, sur sa face qui est tournée vers l'intérieur de la pièce, c'est-à-dire sur sa face inférieure dans cette application particulière, d'une couche de matière noire 6, à fort pouvoir émissif, pour augmenter le rayonnement en direction de l'intérieur de la pièce. Par ailleurs la bande composite 4 comporte, au-dessus de la feuille mince conductrice 7, une couche 5 de mousse de matière plastique sur laquelle est finalement appliquée une feuille mince 8, métallique ou métallisée, formant un réflecteur supérieur pour le rayonnement infrarouge.

Les bandes composites parallèles 4, par exemple au nombre de quatre dans la forme d'exécution non limitative décrite, sont fixées, à leurs extrémités, à des supports transversaux 9,10,11,12,13 qui sont eux-mêmes accrochés aux murs 3 par des moyens de suspension appropriés 14, tels que des ressorts. Les supports 9-13 sont avantageusement constitués par des barrettes de connexion dans lesquelles sont pincées et fixées les extrémités des bandes composites 4 et qui sont agencées de manière à établir la continuité du circuit électrique sineux ou à méandres formé par les feuilles minces conductrices 5 des différentes bandes composites 4 et à raccorder ce circuit continu à une source de courant électrique à basse tension, par exemple de 48 volts ou inférieure. Cette source de courant est représentée par un transformateur 15 dont l'enroulement primaire est relié aux bornes du secteur 16 et dont l'enroulement secondaire à basse tension est connecté, par des câbles 17,18, respectivement à deux bornes 19,20. La borne 19 est portée par la barrette de connexion extrême 9 dont la largeur correspond à celle d'une bande composite 4, et cette borne 19 établit la connexion électrique entre le câble d'alimentation 17 et l'extrémité droite de la feuille mince conductrice 5 faisant partie de la première bande composite 4 reliée à la barrette 9. La figure 4 illustre d'une manière plus détaillée une forme d'exécution de la borne 19. Cette borne comprend un boulon traversant de part en part la feuille mince conductrice 5. Ce boulon maintient une cosse 21 qui est fixée au câble 17, plaquée contre la feuille mince conductrice 5 afin d'assurer la liaison électrique. Suivant une variante la connexion pourrait être également réalisée par soudage des extrémités des câbles 17,18 directement aux feuilles minces conductrices 5.

La première bande composite 4 du dispositif de chauffage 1 s'étend de la barrette de connexion extrême 9 à la barrette de connexion intermédiaire 10 qui a, elle, une longueur supérieure à deux fois la largeur d'une bande composite 4. Cette barrette de connexion intermédiaire 10 établit une connexion électrique entre les extrémités gauches des feuilles minces conductrices 5 des première et deuxième bandes composites élémentaires 4. De la même façon l'extrémité droite de la deuxième bande composite élémentaire 4 est maintenue par la barrette de connexion intermédiaire 11 maintenant également l'extrémité droite de la troisième bande composite élémentaire 4 et assurant la liaison électrique entre les feuilles minces conductrices 5 des deuxième et troisième bandes 4. L'extrémité gauche de la troisième bande composite 4 est maintenue par la barrette de connexion intermédiaire 12 qui maintient également l'extrémité gauche de la quatrième bande 4 et établit une liaison électrique entre les feuilles minces conductrices 5 des troisième et quatrième bandes 4. Enfin l'extrémité droite de la quatrième bande 4 est maintenue par la barrette de connexion extrême 13 portant la borne 20 raccordée au câble d'alimentation 18.

La figure 2 illustre une utilisation particulière du dispositif 1 de chauffage par rayonnement infrarouge suivant l'invention. Dans ce cas ce dispositif 1 s'étend au-dessus d'une nappe horizontale 22 qui est tendue et accrochée, le long de ses bords, à des lisses 23 constituées par des profilés fixés aux murs 3, en formant un cadre horizontal autour de la pièce. De ce fait le dispositif de chauffage 1 est totalement caché et le rayonnement infrarouge qu'il émet vers l'intérieur de la pièce, traverse sans encombre la nappe horizontale 22 qui, à cet effet, est réalisée en un matériau perméable à un tel rayonnement.

Le dispositif de chauffage 1 suivant l'invention peut être également utilisé sous la forme d'une cassette ou d'un panneau indépendant comportant un cadre périphérique sur lequel sont montées les bandes composites parallèles 4.

## Revendications

1. Dispositif de chauffage, par rayonnement infrarouge, fixé sur un mur (3) ou sous le plafond (2) d'une pièce d'un bâtiment, comportant un émetteur de rayonnement infrarouge plan constitué par une feuille (5) en un matériau conducteur de l'électricité raccordé à une source (15,16) d'alimentation en courant électrique à basse tension, caractérisé en ce que la feuille (5) conductrice de l'électricité fait partie d'au moins une bande composite (4) et elle est revêtue, sur sa face qui est tournée vers l'intérieur de la pièce à chauffer, d'une couche mince noire (6) à pouvoir émissif élevé et, du côté opposé, d'une feuille (8) formant réflecteur du rayonnement infrarouge en direction de l'intérieur de la pièce.

2. Dispositif suivant la revendication 1 caractérisé en ce que chaque bande composite (4) comprend une couche de mousse de matière plastique (7) interposée entre la feuille mince conductrice (5) et la feuille (8) formant réflecteur du rayonnement infrarouge.

3. Dispositif suivant l'une quelconque des revendications précédentes caractérisé en ce qu'il comprend plusieur bandes composites parallèles (4) dont les extrémités sont fixées à des barrettes de connexion transversales (9-13) qui sont accrochées au plafond (2) ou au mur (3) de la pièce par des moyens de suspension (14) tels que des ressorts.

4. Dispositif suivant la revendication 3 caractérisé en ce que les bandes composites (4) sont reliées entre elles, par les barrettes de connexion intermédiaires (10,11,12) de manière à établir un circuit électrique sineux ou à méandres, et les barrettes de connexion extrêmes (9,13) qui sont fixées aux extrémités, situées d'un même côté des deux bandes composites extrêmes du groupe de bandes parallèles, portent des bornes respectives (19,20) reliées à des câbles d'alimentation électrique (17,18) connectés à la source d'alimentation électrique à basse tension (15,16).

5. Dispositif suivant la revendication 4 caractérisé en ce que chacune des bornes (19,20) comprend un boulon traversant la feuille mince conductrice (5) et maintenant une cosse (21), raccordée à un câble d'alimentation (17), plaquée contre cette feuille mince conductrice (5).

6. Dispositif suivant la revendication 4 caractérisé en ce que chaque câble d'alimentation (17,18) est soudé directement à l'extrémité de la feuille mince conductrice (5) d'une bande composite extrême (4).

## Patentansprüche

1. Heizvorrichtung mittels infraroter Strahlung, die an einer Wand (3) oder unter der Decke (2) eines Zimmers eines Gebäudes angebracht ist, mit einem ebenen Infrarotstrahler, welcher durch eine mit einer elektrischen Niederspannungsstromquelle (15, 16) verbundenen Folie (5) aus elektrisch leitendem Material gebildet wird, dadurch gekennzeichnet, daß die elektrisch leitende Folie (5) ein Teil von mindestens einem zusammengesetzten Streifen (4) ist, und sie auf der Seite, die ins Innere des zu beheizenden Zimmers weist, mit einer dünnen, schwarzen Beschichtung (6) mit hohem Emissionsvermögen versehen ist, und auf der gegenüberliegenden Seite mit einer Schicht (8), welche die infrarote Strahlung in Richtung des Inneren des Zimmers reflektiert.

2. Vorrichtung nach Anspruch 1, dadurch gekennzeichnet, daß jeder zusammengesetzte Streifen (4) eine Schaumschicht aus Kunststoff (7) aufweist, die zwischen der dünnen Leiterfolie (5) und der infrarote Strahlung reflektierenden Schicht (8) liegt.

3. Vorrichtung nach einem der vorhergehenden Ansprüche, dadurch gekennzeichnet, daß sie mehrere zusammengesetzte, parallele Streifen umfaßt, deren Enden an mehreren querverlaufenden Verbindungsstegen (9- 13) befestigt sind, welche an der Decke (2) oder der Wand (3) des Zimmers mittels Aufhängungseinrichtung (14), wie beispielsweise Federn, befestigt sind.

4. Vorrichtung nach Anspruch 3, dadurch gekennzeichnet, daß die zusammengesetzten Streifen (4) untereinander mittels zwischengeschalteter Verbindungstege (10, 11, 12) verbunden sind, so daß sie einen gewundenen oder meanderförmigen Stromkreis bilden, und die äußeren Verbindungstege (9, 13), welche an den Rändern befestigt sind und sich auf derselben Seite der beiden am Rand liegenden Verbindungsglieder der Gruppe von parallelen Streifen befinden, tragen ihre jeweiligen Anschlußklemmen (19, 20), die mit Stromversorgungskabeln (17, 18) verbunden sind, welche ihrerseits mit einer Niederspannungstromquelle (15, 16) verbunden sind.

5. Vorrichtung nach Anspruch 4, dadurch gekennzeichnet, daß jede der Anschlußklemmen (19, 20) einen Schraubenbolzen mit Mutter aufweist, der durch die dünne leitende Folie (5) durchgesteckt ist und einen auf der dünnen, leitenden Folie (5) aufliegenden Kabelschuh (21) festhält, welcher mit einem Stromversorgungskabel (17) verbunden ist.

6. Vorrichtung nach Anspruch 4, dadurch gekennzeichnet, daß jedes Versorgungskabel (17, 18) direkt am Ende einer dünnen, leitenden Schicht (5) eines am Rand liegenden Verbindungsstreifens (4) angelötet ist.

## Claims

1. Device for heating by infrared radiation, fixed on a wall (3) or beneath the ceiling (2) of a room in a building, comprising a plane infrared radiation emitter constituted by a sheet (5) of an electrically conducting material connected to a source (15, 16) of low-voltage electric current supply, characterized in that the electrically conducting sheet (5) forms part of at least one composite band (4) and it is coated, on its face turned towards the interior of the room to be heated, with a thin, black layer (6) with high emissive power and, on the opposite side, with a sheet (8) forming reflector of the infrared radiation in the direction of the interior of the room.

2. Device according to Claim 1, characterized in that each composite band (4) comprises a layer of plastics foam (7) interposed between the thin conducting sheet (5) and the sheet (8) forming reflector of the infrared radiation.

3. Device according to either one of the preceding Claims, characterized in that it comprises a plurality of parallel composite bands (4) of which the ends are fixed to transverse connecting bars (9-13) which are fastened to the ceiling (2) or to the wall (3) of the room by suspension means (14) such as springs.

4. Device according to Claim 3, characterized in that the composite bands (4) are connected together by intermediate connection bars (10, 11, 12) so as to establish a sinuous or meandering electric circuit, and the end connection bars (9, 13) which are fixed to the ends, located on the same side of the two end composite bands of the group of parallel bands, bear respective terminals (19, 20) connected to electric supply cables (16, 18) connected to the low voltage electric supply source (15, 16).

5. Device according to Claim 4, characterized in that each of the terminals (19, 20) comprises a bolt traversing the thin conducting sheet (5) and maintaining a tag (21), connected to a supply cable (17), applied against this thin conducting sheet (5).

6. Device according to Claim 4, characterized in that each supply cable (17, 18) is welded directly to the end of the thin conducting sheet (5) of an end composite band (4).
